Europäisches Patentamt

European Patent Office

Office européen des brevets

(19)

(11) EP 1 295 911 A1

(12) **EUROPEAN PATENT APPLICATION**

(43) Date of publication:
26.03.2003 Bulletin 2003/13

(51) Int Cl.⁷: $C08L\ 35/02$, $C09D\ 135/02$, $C09J\ 135/02$, $C04B\ 24/26$

(21) Application number: 02256329.0

(22) Date of filing: 12.09.2002

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(30) Priority: 25.09.2001 US 324816 P

(71) Applicant: **ROHM AND HAAS COMPANY**
**Philadelphia, Pennsylvania 19106-2399 (US)**

(72) Inventor: **Rimmer, John Wayne**
**Kintnersville, Pennsylvnia 18930 (US)**

(74) Representative: **Kent, Venetia Katherine**
**Rohm and Haas (UK) Ltd**
**European Operations Patent Dept.**
**Lennig House**
**2 Mason's Avenue**
**Croydon, CR9 3NB (GB)**

(54) **Redispersible powder composition comprising protective colloid, vinyl ester based polymer and olefin - maleic anhydride copolymer**

(57) A polymeric composition including: (1) an addition polymer including at least 20 wt%, based on dry addition polymer weight, copolymerized vinyl ester monomer, (2) a protective colloid, and (3) 0.1 to 3.0 wt%, based on dry composition weight, olefin/maleic anhydride copolymer having an olefin/maleic anhydride molar ratio of 30/70 to 70/30, the composition in pulverulent or aqueous form, the composition optionally including a hydraulic substance such as cement. The invention also relates to a method for improving the water resistance of a dry or cured composition by using the composition.

EP 1 295 911 A1

**Description**

This invention relates to a modified polymeric composition. More particularly, this invention relates to a polymeric composition including: (1) an addition polymer including at least 20 wt%, based on dry addition polymer weight, copolymerized vinyl ester monomer, (2) a protective colloid, and (3) 0.1 to 3.0 wt%, based on dry composition weight, olefin/maleic anhydride copolymer having an olefin/maleic anhydride molar ratio of 30/70 to 70/30, the composition in pulverulent or aqueous form, the composition optionally including a hydraulic substance such as cement. The invention also relates to a method for improving the water resistance of a dry or cured composition by using the composition.

Dry compositions such as, for example, adhesives and coatings and cured compositions such as, for example, polymer-modified mortars and patching cements often contain addition polymers including at least 20 wt%, based on dry addition polymer weight, copolymerized vinyl ester monomer such as, for example, vinyl acetate and a protective colloid such as, for example, polyvinyl alcohol. In one embodiment an addition polymer including at least 20 wt%, based on dry addition polymer weight, copolymerized vinyl ester monomer may be formed via emulsion polymerization stabilized by a protective colloid. In another embodiment an addition polymer including at least 20 wt%, based on dry addition polymer weight, copolymerized vinyl ester monomer may be formed via emulsion polymerization stabilized with a surfactant, mixed with a protective colloid and subsequently spray dried. Such compositions are more water sensitive than corresponding polymeric compositions not incorporating protective colloids.

US Patent No. 6,242,512 discloses a redispersible dispersion powder composition including a water-insoluble base polymer and a water-soluble atomizing protective colloid. The protective colloids include partly neutralized copolymers of olefinically unsaturated mono- or dicarboxylic acids or anhydrides thereof having an acid content of >80 mole% in the case of copolymers with C3- to C12- alkenes or styrene.

The present invention serves to provide a dry or cured composition including an addition polymer including at least 20 wt%, based on dry addition polymer weight, copolymerized vinyl ester monomer and a protective colloid modified with 0.1 to 3.0 wt%, based on dry composition weight, olefin/maleic anhydride copolymer having an olefin/maleic anhydride molar ratio of 30/70 to 70/30, the composition optionally including a hydraulic substance, which composition surprisingly exhibits water resistance and/or adhesion to a substrate superior to that of the unmodified composition.

In a first aspect of the present invention there is provided a pulverulent polymeric composition comprising: (1) an addition polymer comprising at least 20 wt%, based on dry addition polymer weight, copolymerized vinyl ester monomer, (2) a protective colloid, and (3) 0.1 to 3.0 wt%, based on dry composition weight, olefin/maleic anhydride copolymer having an olefin/maleic anhydride molar ratio of 30/70 to 70/30.

In a second aspect of the present invention there is provided an aqueous polymeric composition comprising (1) an addition polymer comprising at least 20 wt%, copolymerized vinyl ester monomer, (2) a protective colloid, and (3) 0.1 to 3.0 wt%, based on dry composition weight, olefin/maleic anhydride copolymer having an olefin/maleic anhydride molar ratio of 30/70 to 70/30.

In a third aspect of the present invention there is provided a method for improving the water resistance of a dry composition formed from an addition polymer comprising at least 20 wt%, based on dry addition polymer weight, copolymerized vinyl ester monomer and a protective colloid comprising admixing 0.1 to 3.0 wt%, based on dry composition weight, olefin/maleic anhydride copolymer having an olefin/maleic anhydride molar ratio of 30/70 to 70/30; and drying or curing said composition.

The addition polymer contains at least 20 wt%, based on dry addition polymer weight, copolymerized vinyl ester monomer such as, for example, vinyl acetate, vinyl propionate, vinyl butyrate, vinyl 2-ethyl hexanoate, vinyl laurate, vinyls pivalate, 1-methylvinyl acetate, and vinyl esters of branched carboxylic acids having 5-12 carbon atoms (as vinyl versatate). The addition polymer additionally contains copolymerized monoethylenically-unsaturated monomer(s) such as, for example, (meth)acrylic ester monomer including methyl (meth)acrylate, ethyl (meth)acrylate, butyl (meth)acrylate, 2-ethylhexyl (meth)acrylate, decyl (meth)acrylate, lauryl (meth)acrylate, stearyl (meth)acrylate, hydroxyethyl (meth)acrylate, hydroxypropyl (meth)acrylate, aminoalkyl (meth)acrylate, N-alkyl aminoalkyl (meth)acrylate, N, N-dialkyl aminoalkyl (meth)acrylate; N-alkoxyethyl (meth)acrylate; urieido (meth)acrylate; (meth)acrylonitrile; (meth) acrylamide; styrene or alkyl-substituted styrenes; butadiene; ethylene, vinyl monomers which are not vinyl esters such as vinyl chloride, vinylidene chloride, and N-vinyl pyrollidone; allyl (meth)acrylate, diallyl phthalate, ethylene glycol di (meth)acrylate, 1,3-butylene glycol di(meth)acrylate, 1,6-hexanediol di(meth)acrylate, and divinyl benzene.. The use of the term "(meth)" followed by another term such as acrylate, acrylonitrile, or acrylamide, as used throughout the disclosure, refers to both acrylate, acrylonitrile, or acrylamide and methacrylate,methacrylonitrile, and methacrylamide, respectively.

The addition polymer may contain, as copolymerized units, from 0 to 10% by weight, based on dry polymer weight, monoethylenically-unsaturated acid monomer such as, for example, acrylic acid, methacrylic acid, crotonic acid, itaconic acid, vinyl sulfonic acid, 2-acrylamidopropane sulfonate, sulfoethyl methacrylate, phosphoethyl methacrylate, fumaric acid, maleic acid, monomethyl itaconate, monomethyl fumarate, monobutyl fumarate, and maleic anhydride.

The polymerization techniques used to prepare the addition polymer are well known. Preferred is emulsion polymerization. Conventional surfactants may be used such as, for example, anionic and/or nonionic emulsifiers such as, for example, alkali metal or ammonium salts of alkyl, aryl, or alkylaryl sulfates, sulfonates or phosphates; alkyl sulfonic acids; sulfosuccinate salts; fatty acids; ethylenically unsaturated surfactant monomers; and ethoxylated alcohols or phenols. The amount of surfactant used is usually 0.1% to 6% by weight, based on the weight of monomer. Alternatively, a protective colloid such as, for example, polyvinyl alcohol, partially acetylated polyvinyl alcohol, hydroxyethyl cellulose, hydroxymethyl cellulose, hydroxypropyl cellulose, poly N-vinyl pyrollidone, carboxymethyl cellulose, and gum arabic, may be used in the emulsion polymerization, either exclusively or in conjuction with a surfactant. The reaction temperature is typically maintained at a temperature lower than 100 °C throughout the course of the reaction. Preferred is a reaction temperature between 30 °C and 95 °C, more preferably between 50 °C and 90 °C. A thermal or redox initiation process may be used. The monomer mixture may be added neat or as an emulsion in water. The monomer mixture may be added in one or more additions or continuously, linearly or not, over the reaction period, or combinations thereof.

Further, a chain transfer agent such as, for example, isopropanol, halogenated compounds, n-butyl mercaptan, n-amyl mercaptan, n-dodecyl mercaptan, t-dodecyl mercaptan, alkyl thioglycolate, mercaptopropionic acid, and alkyl mercaptoalkanoate in an amount of 0 to 5% by weight based on monomer weight may be used to regulate the molecular weight of the addition polymer.

In another aspect of the present invention the emulsion polymer may be prepared by a multistage emulsion polymerization process, in which at least two stages differing in composition are polymerized in sequential fashion. Such a process usually results in the formation of at least two mutually incompatible polymer compositions, thereby resulting in the formation of at least two phases within the polymer particles. Such particles are composed of two or more phases of various geometries such as, for example, core/shell or core/sheath particles, core/shell particles with shell phases incompletely encapsulating the core, core/shell particles with a multiplicity of cores, and interpenetrating network particles. In all of these cases the majority of the surface area of the particle will be occupied by at least one outer phase and the interior of the particle will be occupied by at least one inner phase. Each of the stages of the multi-staged emulsion polymer may include the monomers, surfactants, protective colloid, redox initiation system, chain transfer agents, etc. as disclosed herein-above for the emulsion polymer. In the case of a multi-staged polymer particle the composition for the purpose of this invention is to be calculated herein using the overall composition of the emulsion polymer without regard for the number of stages or phases therein. The polymerization techniques used to prepare such multistage emulsion polymers are well known in the art such as, for example, US Patents No. 4,325,856; 4,654,397; and 4,814,373.

The emulsion polymer has an average particle diameter from 20 to 1000 nanometers, preferably from 70 to 300 nanometers as determined using a Brookhaven Model BI-90 particle sizer manufactured by Brookhaven Instruments Corporation, Holtsville NY, reported as "effective diameter". Also contemplated are multimodal particle size emulsion polymers wherein two or more distinct particle sizes or very broad distributions are provided as is taught in US Patents No. 5,340,858; 5,350,787; 5,352,720; 4,539,361; and 4,456,726.

The glass transition temperature ("Tg") of the emulsion polymer is typically from -20 °C to 100 °C, the monomers and amounts of the monomers selected to achieve the desired polymer Tg range being well known in the art. Tgs used herein are those calculated by using the Fox equation (T.G. Fox, Bull. Am. Physics Soc., Volume 1, Issue No. 3, page 123(1956)). that is, for calculating the Tg of a copolymer of monomers M1 and M2,

$$1/Tg(calc.) = w(M1)/Tg(M1) + w(M2)/Tg(M2)$$

, wherein
Tg(calc.) is the glass transition temperature calculated for the copolymer
w(M1) is the weight fraction of monomer M1 in the copolymer
w(M2) is the weight fraction of monomer M2 in the copolymer
Tg(M1) is the glass transition temperature of the homopolymer of M1
Tg(M2) is the glass transition temperature of the homopolymer of M2, all temperatures being in °K.

The glass transition temperatures of homopolymers may be found, for example, in "Polymer Handbook", edited by J. Brandrup and E.H. Immergut, Interscience Publishers.

The polymeric composition of the present invention includes a protective colloid such as, for example, polyvinyl alcohol, partially acetylated polyvinyl alcohol, hydroxyethyl cellulose, poly N-vinyl pyrollidone, carboxymethyl cellulose, and gum arabic. By "protective colloid" herein is is meant a composition, namely, a nonionic polymer which is suitable for functioning as a protective colloid in emulsion polymerization; it is not to be taken that the protective colloid necessarily has been, is being, or will be used in that function in the composition or method of this invention. Preferred as the protective colloid is polyvinyl alcohol. The protective colloid may be admixed with the addition polymer or the addition polymer may be formed in the presence of the protective colloid. The protective colloid is typically present at a level of 0.05% to40%, preferably 0.05% to 10%, by weight based on the weight of the addition polymer.

The polymeric composition of the present invention includes 0.1 to 3.0 wt%, preferably 0.1 to 2.0 wt%, more preferably 0.1 to0.5 wt%, based on dry composition weight, olefin/maleic anhydride copolymer having an olefin/maleic anhydride molar ratio of 30/70 to 70/30, preferably an olefin/maleic anhydride molar ratio of 40/60 to 60/40. Suitable olefins include butenes, hexenes, decenes, diisobutylene, and the like. Preferred are 1-alkenes. Commercially available alkene mixtures containing 1-alkene compositions are also suitable. Olefin/maleic anhydride copolymer additionally including minor amounts of other copolymerized monomers such as from 0-5 mole % copolymerized styrene or alkyl substituted styrenes wherein the alkyl groups are selected from C1 to C6 n-, i-, s-, or t-alkyl groups, as are chemically attainable, are included in the olefin/maleic anhydride copolymers herein. Such minor amounts of other copolymerized monomers are not included in the calculation of molar ratios of the olefin/maleic anhydride copolymer herein. The olefin/maleic anhydride copolymer is prepared by solution polymerization using a free radical initiator such as, for example, a peroxide or azo compound as is well-known in the art as taught by US Patent No. 2,901,453 and US Patent No. 3,560,456. The olefin/maleic anhydride copolymer typically has a number average molecular weight, as measured by gel permeation chromatography, between 500 and 25,000, preferably betwen 500 and 10,000. The olefin/maleic anhydride copolymer may be neutralized with a base such as, for example, sodium hydroxide, potassium hydroxide, and ammonia to provide a disodium salt of an olefin/maleic acid copolymer, a dipotassium salt of an olefin/maleic acid copolymer, and an ammonium salt of an olefin/maleamic acid copolymer, respectively. Neutralization of 0 to 100% of the copolymerized maleic anhydride units is contemplated; neutralization by mixtures of bases is also contemplated. The effect of neutralization, if any, on the olefin/maleic anhydride molar ratio is not included in the calculation of the olefin/maleic anhydride molar ratio herein.

The polymeric composition may include, for example, organic or inorganic pigments, extenders, sand, aggregates; in one embodiment the polymeric composition may include a hydraulic substance, referred to herein as a "cementitious substance", such as natural cement, Portland cement of any of ASTM types I-V, pozzolan cement, gypsum, and the like. The polymeric compositions of this invention include compositions known in the art as coatings, adhesives, mortars, cementitious grouts, cementious coatings, and the like. The polymeric composition may also contain conventional coatings adjuvants such as, for example, emulsifiers, buffers, neutralizers, tackifiers, coalescents, thickeners or rheology modifiers, freeze-thaw additives, wet-edge aids, humectants, wetting agents, biocides, antifoaming agents, colorants, waxes, water-reducing agents, antiblocking agents for compositions in powder form, and anti-oxidants.

The aqueous polymeric composition of this invention is prepared by techniques which are well known in the art. First, if the coating composition is to be pigmented, at least one pigment may be well dispersed in an aqueous medium under high shear such as is afforded by a COWLES® mixer or, in the alternative, at least one predispersed pigment may be used. Then the addition polymer may be added under low shear stirring along with other coatings adjuvants as desired. Alternatively, the addition polymer may be present during the pigment dispersion step. The aqueous coating composition may contain up to 50%, by weight based on the total dry weight of the polymer, of an addition polymer not meeting the limitations of the addition polymer of the present invention, including a film-forming and/or a non-film-forming addition polymer.

If a pulverulent polymeric composition is desired the aqueous polymeric composition with or without additional optional ingredients may be dried by known techniques such as spray drying. Alternatively, the components of the pulverulent polymeric composition may be dry ingredients and may then be dry-blended.

The solids content of the aqueous polymeric composition of the invention may be from 25% to 60% by volume. The viscosity of the aqueous polymeric composition may be from 50 KU (Krebs Units) to 200 KU as measured using a Brookfield Digital viscometer KU-1; the viscosities appropriate for different application methods vary considerably.

Conventional aqueous composition application methods such as, for example, brushing, trowelling, rolling, and spraying methods such as, for example, air-atomized spray, air-assisted spray, airless spray, high volume low pressure spray, and air-assisted airless spray may be used in the method of this invention. The aqueous polymeric composition may be advantageously applied to substrates such as, for example, plastic, wood, metal, primed surfaces, previously painted surfaces, weathered painted surfaces and cementitious substrates.

In the embodiment wherein the pulverulent polymeric composition of this invention is used, it is typically dispersed in a medium, preferably an aqueous medium, and then sprayed, cast, rolled, etc. into a desired form.

Drying may be effected at temperatures from 0 °C to 120 °C.; drying is typically allowed to proceed under ambient conditions such as, for example, at 0 °C to 35 °C. Curing if crosslinking processes are involved or when the hydration of hydraulic substances is occuring typically occurs at the same temperatures.

The following examples are presented to illustrate the invention and the results obtained by the test procedures.

Test Procedures

Water Absorption of cementitious EIFS basecoat / adhesive.

The compositions to be evaluated were trowel applied over a 4" X 4 " sectionof Expanded Polystyrene board with reinforcing mesh embedded. The samples were then allowed to cure 7days at 75° F. and 50 % relative humidity. The edges of the samples were then sealed with paraffin wax ; The initial weight of the samples was then recorded ; Samples were then immersed face down in water ; The samples were removed after 1, 2, 4, 8, and 24 hours,excess water blotted off and reweighed; the weight gain was expressed in g /m$^2$.

Tensile Strength

Tensile strength was tested according to ASTM C-190 specifications using briquet specimens, which were prepared and conditioned according to specified procedures. To measure tensile strength, a specimen was clipped onto the testing machine and subjected to a continuous load which pulled the sample apart at the rate of $600 \pm 25$ lbs. force/min. The point at which the specimen broke(maximum load) was recorded from the machine. The tensile strength (in lbs/sq inch) was calculated from the maximum load and the cross sectional area of the specimen.

Shear Bond Adhesion

The Shear Bond Adhesion test determined the force required to shear off a mortar patch that had been cured on a concrete base. A 2" x 2" x 0.5" cement mortar patch was centrally cast and cured on a 4" x 6" x 1" cured unmodified concrete base piece. After mounting on the test machine, a shearing load was applied to the patch at a steadily increasing rate until failure occured. The shear bond adhesion strength was calculated by dividing the load (lbs) at failure by the interfacial area of the patch (sq. inches). The type of failure obtained was also reported: adhesive failure ("A") was when the patch was sheared off cleanly from the concrete base; cohesive failure ("C") was when failure occured within the concrete base piece or in the patch, but not at the interface.
The abbreviations listed below are used throughout the examples.

| pMAA | = polymethacrylic acid |
| SSNF | = sodium sulfonated naphthalene formaldehyde condensate |
| SDIB/MA | = sodium diisobutylene/maleic anhydride copolymer |
| VA | = Vinyl Acetate |
| EIFS | = Exterior Insulated Finishing System |
| STY/MA | = styrene/maleic anhydride copolymer |
| DI water | = Deionized water |

EXAMPLES 1-6 and COMPARATIVE EXAMPLES A-G. Preparation and evaluation of a cementitious EIFS dry basecoat/adhesive

A formulation was prepared by mixing the following:

| Materials | Parts By Weight |
|---|---|
| 60 Mesh Sand | 357.0 |

(continued)

| Materials | Parts By Weight |
|---|---|
| Silica Flour 120 | 54.8 |
| Portland cement Type I | 292.5 |
| Dry Polymer A (1) | 30.0 |
| Nyad G | 11.3 |
| Calcium Stearate | 2.3 |
| Bermocoll E-481FQ | 1.5 |
| Colloids 775DD | 0.8 |
| Dry Polymer B (2) | 1.5 |

(1) Dry Polymer A = Commercial VA/VeoVa polymer containing 7% polyvinyl alcohol (by analysis)

(2) As described in Table 1.0

Table 1.1.

| Evaluation of cured cementitious EIFS basecoat / adhesive for water absorption (in g/m$^2$; average of 2 samples) | | | | | | |
|---|---|---|---|---|---|---|
| Example | Dry Polymer B | 1 Hour Immersion | 2 Hours Immersion | 4 Hours Immersion | 8 Hours Immersion | 24 Hours Immersion |
| Comp.A | none | 168 | 196 | 221 | 246 | 310 |
| Comp.B | 0.1 % SSNF | 151 | 179 | 200 | 223 | 289 |
| Comp.C | 0.2 % SSNF | 163 | 187 | 203 | 225 | 306 |
| Comp.D | 0.1 % SSNF, Na salt | 190 | 212 | 229 | 250 | 332 |
| Comp.E | 0.1 0.2 % SSNF, Na salt | 153 | 183 | 204 | 223 | 288 |
| 1 | 0.1%64/36 SDIB/MA, Na salt | 138 | 190 | 215 | 231 | 277 |
| 2 | 0.2% 64/36 SDIB/MA, Na salt | 95 | 117 | 132 | 148 | 189 |
| Comp.E | 0.2 % pMAA Copolymer | 195 | 223 | 253 | 279 | 342 |
| Comp.F | 0.2 % pMAA | 242 | 247 | 261 | 278 | 319 |

Examples 1-2 of this invention exhibit water resistance (lower water absorption levels) superior to that for Comparative Examples A-F.

Table 1.2. Additional evaluation of cured cementitious EIFS basecoat / adhesive for water absorption (in g/m$^2$; average of 2 samples)

| Example | Dry Polymer B | 1 hour immersion | 2 hours immersion | 4 hours immersion | 8 hours immersion | 24 hours immersion |
|---|---|---|---|---|---|---|

| 3 | 0.2 %60/40 SDIB/MA, NH4 salt | 64 | 86 | 113 | 148 | 236 |
| 4 | 0.2 % 50/50 SDIB/MA, NH4 salt | 76 | 100 | 135 | 164 | 266 |
| 5 | 0.2 % 48/52 SDIB/MA, Na salt | 79 | 102 | 133 | 167 | 265 |
| 6 | 0.2 % 64/36 SDIB/MA, Na salt | 69 | 97 | 127 | 158 | 267 |
| Comp.G | 0.2 % STY/MA | 158 | 189 | 213 | 235 | 299 |

Examples 3-6 of this invention exhibit water resistance (lower water absorption levels) superior to that for Comparative Example G

EXAMPLES 7 and COMPARATIVE EXAMPLES H. Preparation and evaluation of a polymer modified mortar Mortar was prepared by charging all of the dry components below to a container and shaking it in a polyethylene bag to dry blend those components. The blended dry mix was then charged to the bowl of a Hobart mixer. A paddle mixer blade was attached to the mixer and the speed was set at the lowest setting (number 1). The mixer was started and the water is added while mixing. This wet material was mixed for one minute.

| Example | Comparative H | 7 |
|---|---|---|
| Sand, 60 mesh | 2000 | 2000 |
| Portland cement, Type I | 800 | 800 |
| Dry Polymer C | 80 | 80 |
| Colloids 775DD | 8 | 8 |
| DIB/Man 64/36, dry | -- | 3.3 |
| Water | 508 | 376 |
| Water/cement weight ratio | 0.635 | 0.47 |
| Polymer/cement weight ratio | 0.10 | 0.10 |
| (1) Dry Polymer C = Commercial Ethylene/vinyl acetate polymer including at least 20 wt%, based on dry addition polymer weight, vinyl acetate and containing 14.1% polyvinyl alcohol (by analysis) | | |

Table 7.1

| Properties of cured polymer modified mortars | | |
|---|---|---|
| Ingredients | Comparative H | 7 |
| Mechanical strength, | | |
| samples cured at 72 F and 50% relative humidity | | |
| Tensile strength, psi | | |
| 1 day | 81 | 235 |
| 3 days | 296 | -- |
| 7 days | 434 | 612 |

# EP 1 295 911 A1

Table 7.1 (continued)

| Properties of cured polymer modified mortars | | |
|---|---|---|
| Ingredients | Comparative H | 7 |
| Mechanical strength, | | |
| samples cured at 72 F and 50% relative humidity | | |
| Tensile strength, psi | | |
| 7 days dry + 7 days wet | 279 | 323 |
| Shearbond adhesion strength, psi | | |
| 7 days | 136 | 304 |
| Mode of failure | A | A |
| 7 days dry + 7 days wet | 185 | 400 |
| Mode of failure | A | A/C |
| 28 days dry | 103 | 343 |
| Mode of failure | A | A |

Example 7 of this invention exhibits water resistance (wet tensile strength and wet shearbond adhesion) and dry property levels superior to that for Comparative Example H.

## Claims

1.  A pulverulent polymeric composition comprising: (1) an addition polymer comprising at least 20 wt%, based on dry addition polymer weight, copolymerized vinyl ester monomer, (2) a protective colloid, and (3) 0.1 to 3.0 wt%, based on dry composition weight, olefin/maleic anhydride copolymer having an olefin/maleic anhydride molar ratio of 30/70 to 70/30.

2.  An aqueous polymeric composition comprising (1) an addition polymer comprising at least 20 wt%, based on dry addition polymer weight, copolymerized vinyl ester monomer, (2) a protective colloid, and (3) 0.1 to 3.0 wt%, based on dry composition weight, olefin/maleic anhydride copolymer having an olefin/maleic anhydride molar ratio of 30/70 to 70/30.

3.  The composition of claim 1 or claim 2 additionally comprising a hydraulic substance.

4.  The composition of claim 1 or claim 2 comprising 0.1 to 0.5 wt%, based on dry composition weight, of said olefin/maleic anhydride copolymer.

5.  The composition of claim 1 or claim 2 wherein said vinyl ester monomer is vinyl acetate.

6.  The composition of claim 1 or claim 2 wherein said protective colloid comprises polyvinyl alcohol.

7.  A method for improving the water resistance of a dry composition formed from an addition polymer comprising at least 20 wt%, based on dry addition polymer weight, copolymerized vinyl ester monomer and a protective colloid comprising admixing 0.1 to 3.0 wt%, based on dry composition weight, olefin/maleic anhydride copolymer having an olefin/maleic anhydride molar ratio of 30/70 to 70/30; and drying or curing said composition.

8.  The method of claim 6 wherein said composition additionally comprises a hydraulic substance.

9.  The method of claim 6 wherein said composition comprises 0.1 to 0.5 wt%, based on dry composition weight, of said olefin/maleic anhydride copolymer.

10. The method of claim 6 wherein said protective colloid comprises polyvinyl alcohol.

8

**European Patent Office**

# EUROPEAN SEARCH REPORT

Application Number

EP 02 25 6329

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WO 97 24400 A (WACKER CHEMIE GMBH ;WEITZEL HANS PETER (DE); BALL PETER (DE); FIGG) 10 July 1997 (1997-07-10) * page 7, line 9 - line 10; claim 1; examples * | 1-10 | C08L35/02 C09D135/02 C09J135/02 C04B24/26 |
| A | EP 0 467 103 A (BASF AG) 22 January 1992 (1992-01-22) * claims * | 1-10 | |
| A,D | US 6 242 512 B1 (FIGGE REINER  ET AL) 5 June 2001 (2001-06-05) * claims; examples * | 1-10 | |
| A | EP 0 315 278 A (SHELL INT RESEARCH) 10 May 1989 (1989-05-10) * page 4, line 34 - line 35; examples * | 1-10 | |
| | | | TECHNICAL FIELDS SEARCHED (Int.Cl.7) C08L C04B C09D C09J |

The present search report has been drawn up for all claims

| Place of search | Date of completion of the search | Examiner |
|---|---|---|
| MUNICH | 13 January 2003 | Pollio, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 02 25 6329

This annex lists the patent family members relating to the patent documents cited in the above-mentioned European search report.
The members are as contained in the European Patent Office EDP file on
The European Patent Office is in no way liable for these particulars which are merely given for the purpose of information.

13-01-2003

| Patent document cited in search report | | Publication date | Patent family member(s) | | Publication date |
|---|---|---|---|---|---|
| WO 9724400 | A | 10-07-1997 | DE | 19549084 A1 | 03-07-1997 |
| | | | DE | 59602303 D1 | 29-07-1999 |
| | | | WO | 9724400 A1 | 10-07-1997 |
| | | | EP | 0869991 A1 | 14-10-1998 |
| | | | ES | 2135953 T3 | 01-11-1999 |
| | | | US | 6127483 A | 03-10-2000 |
| EP 0467103 | A | 22-01-1992 | DE | 4021216 A1 | 09-01-1992 |
| | | | CA | 2046066 A1 | 04-01-1992 |
| | | | DE | 59103967 D1 | 02-02-1995 |
| | | | EP | 0467103 A2 | 22-01-1992 |
| | | | JP | 4288335 A | 13-10-1992 |
| | | | US | 5342897 A | 30-08-1994 |
| US 6242512 | B1 | 05-06-2001 | DE | 19601699 A1 | 24-07-1997 |
| | | | AT | 184296 T | 15-09-1999 |
| | | | CN | 1208427 A ,B | 17-02-1999 |
| | | | CZ | 9802265 A3 | 14-10-1998 |
| | | | DE | 59700412 D1 | 14-10-1999 |
| | | | WO | 9726295 A1 | 24-07-1997 |
| | | | EP | 0874871 A1 | 04-11-1998 |
| | | | ES | 2138441 T3 | 01-01-2000 |
| | | | JP | 11503790 T | 30-03-1999 |
| | | | KR | 275289 B1 | 15-12-2000 |
| | | | PL | 327856 A1 | 04-01-1999 |
| | | | TW | 467939 B | 11-12-2001 |
| EP 0315278 | A | 10-05-1989 | DE | 3865417 D1 | 14-11-1991 |
| | | | EP | 0315278 A1 | 10-05-1989 |
| | | | JP | 1149811 A | 12-06-1989 |

EPO FORM P0459

For more details about this annex : see Official Journal of the European Patent Office, No. 12/82